Europäisches Patentamt

European Patent Office

Office européen des brevets

(19)

(11) Numéro de publication : **0 301 939 B1**

(12) # FASCICULE DE BREVET EUROPEEN

(45) Date de publication du fascicule du brevet :
25.09.91 Bulletin 91/39

(51) Int. Cl.⁵ : **F02K 1/70**

(21) Numéro de dépôt : 88401850.8

(22) Date de dépôt : 18.07.88

(54) **Inverseur de poussée de turboréacteur muni d'un déflecteur mobile de porte.**

(30) Priorité : 29.07.87 FR 8710731

(43) Date de publication de la demande :
01.02.89 Bulletin 89/05

(45) Mention de la délivrance du brevet :
25.09.91 Bulletin 91/39

(84) Etats contractants désignés :
AT BE CH DE ES FR GB GR IT LI LU NL SE

(56) Documents cités :
FR-A- 2 486 153
FR-A- 2 506 843
FR-A- 2 559 838
GB-A- 2 156 004
US-A- 3 279 182
US-A- 3 815 357
MACHINE DESIGN, vol. 55, no. 2, janvier 1983,
pages 78-79, Cleveland, Ohio, US; G.H.
McLAFFERTY: "New thrust control may boost
fighter maneuverability"

(73) Titulaire : HISPANO-SUIZA Société anonyme
dite:
333, Bureaux de la Colline
F-92213 Saint Cloud (FR)

(72) Inventeur : Dubois, Claude Achille Germain
1, rue du Parc Gonfreville l'Orcher
F-76700 Harfleur (FR)
Inventeur : Lore, Xavier Raymond Yves
57, avenue Léo Lagrange
F-76600 Le Havre (FR)

(74) Mandataire : Moinat, François
S.N.E.C.M.A. Service des Brevets Boîte
Postale 81
F-91003 Evry Cédex (FR)

EP 0 301 939 B1

Jouve, 18, rue Saint-Denis, 75001 PARIS

## Description

La présente invention concerne un inverseur de poussée de turboréacteur à double flux.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

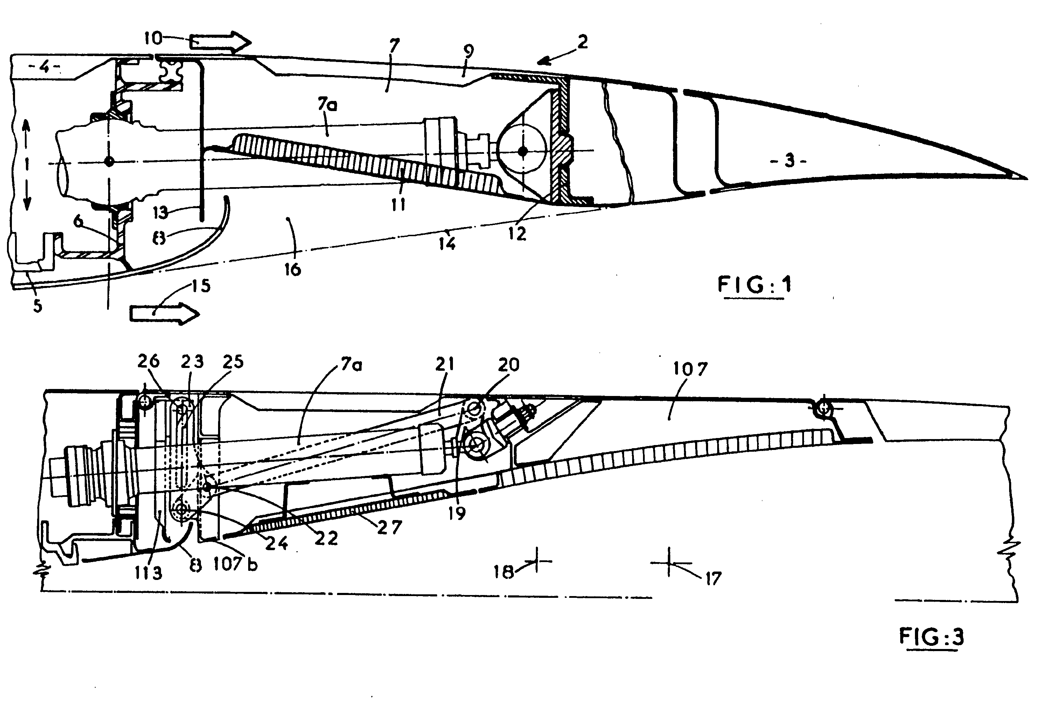

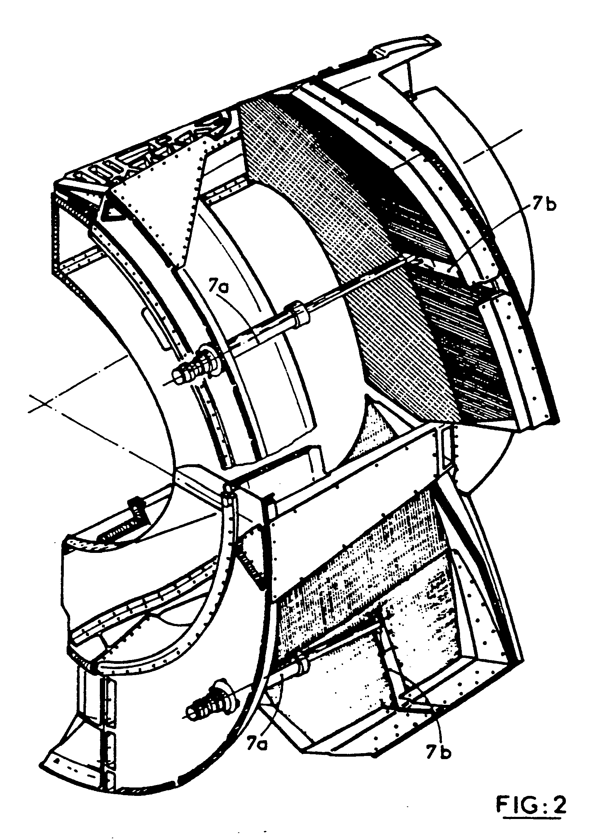

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau externe 5 de veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables, communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion. La figure 2 montre, selon une vue partielle en perspective d'un tel inverseur de poussée, un exemple de réalisation dans une application comportant quatre portes 7 dont deux sont visibles sur la vue partielle. Chaque porte 7 est associée à un moyen de commande des déplacements tels qu'un vérin 7a. Comme visible sur la figure 2, sur la partie avant de la porte 7 est ménagé un logement 7b formant un tunnel pour l'escamotage du corps du vérin 7a lorsque la porte 7 se trouve en position fermée de jet direct.

En aval, amont et aval étant définis par rapport au sens normal de circulation des gaz en poussée directe, la partie fixe 1 se termine par un bord de déviation 8, fixé sous le cadre avant 6 et destiné à assurer une orientation adéquate de l'écoulement, en position d'inversion de poussée. Chaque porte 7 est composée d'un panneau externe 9 venant se placer en position jet direct dans le prolongement du panneau externe 4 de la partie fixe amont 1 pour constituer la paroi aérodynamique continue limitant le flux extérieur au moteur représenté par la flèche 10, d'un panneau interne 11 et d'une structure intérieure 12, assurant la liaison entre les panneaux 9 et 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un déflecteur 13 constitué d'une partie frontale associée ou non à des parties latérales. Afin que la porte 7, en position ouverte d'inversion de poussée, assure des performances suffisantes, il est habituellement nécessaire, comme dans l'exemple connu représenté à la figure 1, que la partie avant du panneau interne 11 s'écarte, dans une direction radiale extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le déflecteur 13 de porte et par le bord de déviation 8 de la partie fixe amont 1, du côté externe, par la partie avant du panneau interne 11 de porte et du côté radialement interne, par ladite surface théorique 14.

Une partie du flux est forcée par le bord de déviation 8 dans ladite cavité 16, créant ainsi une distorsion du flux et des perturbations dans les écoulements. Il en résulte des pertes aérodynamiques qui sont néfastes au fonctionnement en poussée directe.

D'autres exemples de réalisations du type d'inverseur de poussée de turboréacteur à portes basculantes sont décrits notamment par FR A-2486153, FR-A-2506843 et FR A 2559838. Aucune solution pleinement satisfaisante n'a toutefois été proposée pour une amélioration du profil de veine correspondant à une enveloppe aérodynamique de veine correcte en fonctionnement de poussée directe. Notamment une solution tendant à réduire le volume de la cavité 16 décrite ci-dessus en référence à la figure 1 en rapprochant la face interne de la partie avant du panneau interne 11 de la porte 7 de la ligne théorique 14 au moyen d'une réduction de la longueur du déflecteur 13 de porte a pour conséquence de réduire l'efficacité lors du fonctionnement en inversion de poussée, ce qui peut devenir inacceptable. Par suite, le but de l'invention est d'apporter une solution à ces problèmes, en annulant, ou tout au moins en réduisant considérablement, la cavité 16 tout en conservant, en position d'inversion de poussée, un déflecteur 13 de longueur suffisante pour obtenir les performances requises.

Ces buts sont atteints, conformément à l'invention, par un inverseur de poussée du type précité à portes basculantes susceptibles de dévier le flux secondaire d'un turboréacteur à double flux caractérisé en ce que le déflecteur de porte est relié à la porte par des moyens de liaison qui constituent des moyens de déploiement dudit déflecteur lorsque la porte est ouverte, l'inverseur de poussée se trouvant en position d'inversion et des moyens d'escamotage dudit déflecteur lorsque la porte est fermée, l'inverseur de poussée se trouvant dans la position correspondant à la poussée directe, de manière à réduire le volume de la cavité formée, dans ladite position de poussée directe, entre la face interne de la partie avant du panneau interne de porte et la surface théorique de délimitation aérodynamique du profil de veine de circulation du flux secondaire. Plusieurs modes de réalisation desdits moyens de liaison conformes à l'invention entre le déflecteur et la porte peuvent être envisagés. Notamment selon un mode de réalisation préféré de l'invention, les moyens de liaison du déflecteur à la porte comportent une biellette de renvoi reliée par une bielle à l'extrémité de la tige du vérin de commande des déplacements de ladite porte.

D'autres modes de réalisation de l'invention mettent en oeuvre des moyens de pivotement permettant d'obtenir en poussée directe une position du déflecteur rabattue sur la face interne de la partie avant du panneau interne de porte d'inverseur. Ces moyens peuvent également comporter des glissières et des ressorts pour déplacer le déflecteur par translation ou encore, des moyens de pivotement ou de déplacement en oblique peuvent être disposés de manière à intégrer le déflecteur entre le bord de déviation de la partie fixe amont de l'inverseur et la partie supérieure de la porte.

D'autres caractéristiques et avantages de l'invention seront mieux compris à la lecture qui va suivre de plusieurs modes de réalisation de l'invention, en référence aux dessins annexés sur lesquels :
— la figure 1 représente une demi-vue schématique en coupe longitudinale par un plan passant par l'axe de rotation d'un turboréacteur, d'un inverseur de poussée à portes basculantes, en position fermée, d'un type connu et qui a fait précédemment l'objet d'une description ;
— la figure 2 représente une vue partielle en perspective de l'inverseur de poussée représenté à la figure 1, en position déployée ;
— la figure 3 montre, selon une vue analogue à celle de la figure 1 un inverseur de poussée conforme à la présente invention, suivant un mode de réalisation préféré ;
— la figure 4 montre, selon une vue analogue l'inverseur de poussée représenté à la figure 3, mais dans une position déployée correspondant à un fonctionnement en inversion de poussée ;
— la figure 5 schématise la cinématique des déplacements de la porte d'inverseur entre les positions représentées aux figures 3 et 4 respectivement, et de différents éléments mobiles liés à la porte ;
— les figures 6 et 7 représentent une légère variante du dispositif inverseur représenté par les figures 3 à 5 ;

— la figure 8 montre, selon une vue en perspective, une porte d'un inverseur de poussée à portes basculantes, du type représenté aux figures 4 à 7 ;
— la figure 9 représente, selon une vue analogue à celle de la figure 1, un inverseur de poussée à portes basculantes, conforme à l'invention, dans un autre mode de réalisation ;
— la figure 10 montre, dans une vue partielle en perspective, l'inverseur de poussée représenté à la figure 9 ;
— la figure 11 montre, selon un schéma simplifié de réalisation dans une vue analogue à celles des figures 1 et 3, une variante du mode de réalisation d'un inverseur de poussée conforme à l'invention représenté sur les figures 9 et 10 ;
— la figure 12 montre, dans une représentation analogue à celle de la figure 11, une autre variante du même mode de réalisation de l'invention ;
— la figure 13 montre, selon une vue analogue à celles des figures 1 et 3, un inverseur de poussée à portes basculantes, conforme à l'invention, dans un troisième mode de réalisation ;
— la figure 14 montre, selon une vue analogue à celles des figures 1, 3 et 13, un inverseur de poussée à portes basculantes, conforme à l'invention, dans un quatrième mode de réalisation ;
— la figure 15 montre, selon une vue analogue à celles des figures 1, 3, 13 et 14, un inverseur de poussée à portes basculantes, conforme à l'invention, dans un cinquième mode de réalisation ;
— la figure 16 représente une vue schématique selon la flèche F de l'inverseur de poussée représenté à la figure 15.

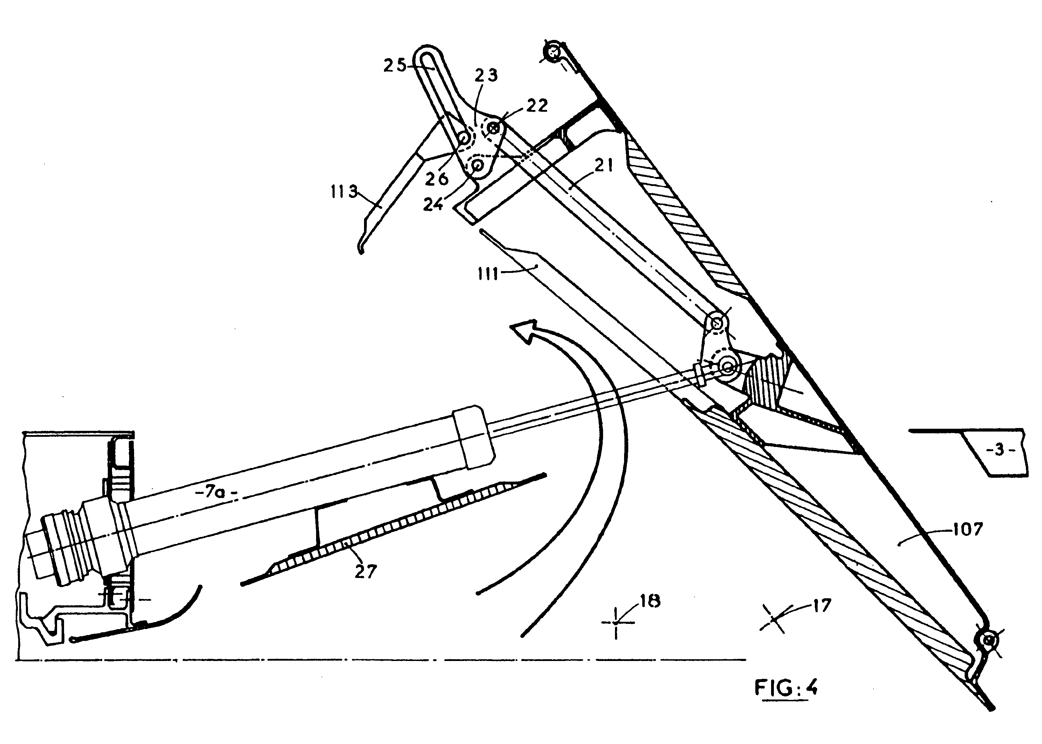

Selon le premier mode de réalisation de l'invention représenté aux figures 3 à 5, un inverseur de poussée, susceptible d'effectuer dans les phases de vol pertinentes d'un avion l'inversion du flux secondaire d'un turboréacteur à double flux, comporte principalement les ensembles et pièces qui ont été précédemment décrits en référence aux figures 1 et 2 dans un exemple connu de réalisation et on conservera les mêmes références de ces éléments lorsqu'ils sont identiques ou augmentés d'une centaine pour les éléments correspondants.

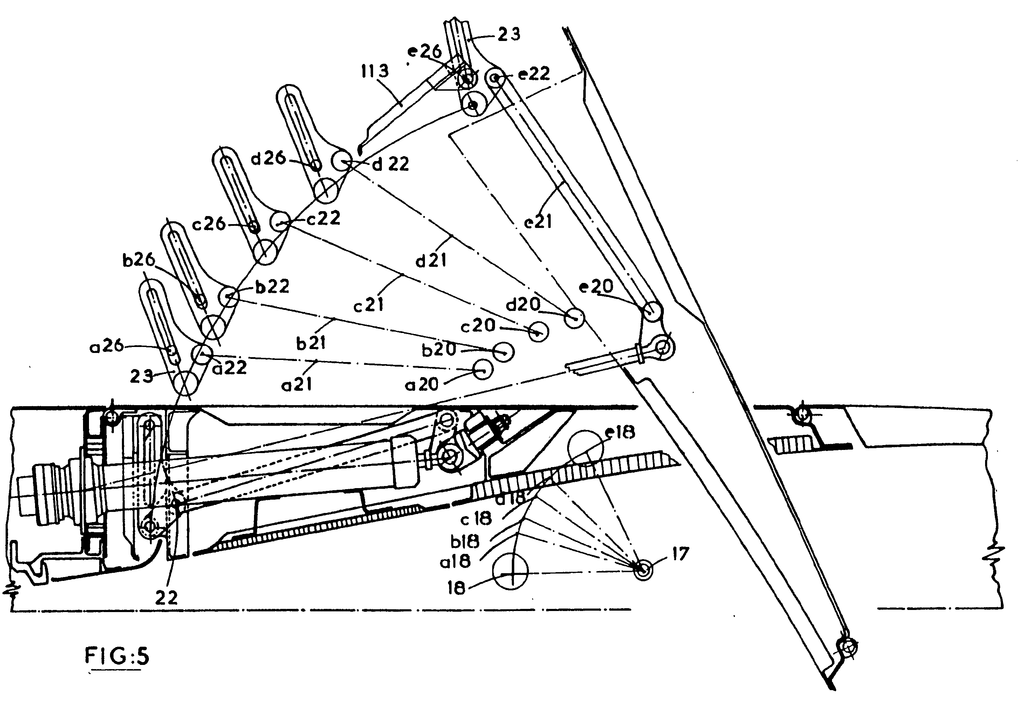

Selon ce premier mode de réalisation de l'invention représenté aux figures 3 à 5, une porte 107 d'inverseur déplaçable autour de pivots tels que 17, qui relient chaque bord latéral de la porte 107 à un élément de structure fixe de l'inverseur, au moyen d'un vérin 7a, entre une position fermée représentée à la figure 3 et une position déployée représentée à la figure 4, comporte, de manière remarquable conforme à l'invention, un déflecteur mobile 113. Ledit déflecteur 113 est relié à la porte 107 par des pivots d'articulation tels que 18, respectivement fixés sur chaque bord latéral de la porte 107. L'extrémité de la tige du vérin 7a de manoeuvre de la porte 107 est solidaire d'un support 19 qui porte un axe 20 qui forme l'articulation d'une première extrémité d'une bielle 21. La deuxième extrémité de ladite bielle 21 est articulée au moyen d'un axe 22 sur une biellette de renvoi 23 qui est articulée sur des pivots 24 solidaires de la paroi avant 107b de la porte 107. Ladite biellette de renvoi 23 comporte une rainure 25 dont les flancs supportent un galet 26 qui est solidaire du déflecteur mobile 113. La figure 5 schématise la cinématique des déplacements de la porte 107 entre sa position fermée correspondant au fonctionnement en poussée directe et sa position déployée correspondant au fonctionnement en inversion de poussée.

Par rapport aux pivots fixes 17, les pivots 18 d'articulation du déflecteur prennent les positions intermédiaires a18, b18, c18, et d18 suivant les déplacements de la porte 107 avant d'atteindre la position e18 correspondant à la position déployée de la porte 107. De même l'axe d'articulation 20 de la première extrémité de la bielle 21, entraîné par les déplacements de l'extrémité de la tige du vérin 7a, prend les positions intermédiaires a20, b20, c20, et d20 avant d'atteindre la position e20, pendant que la bielle 21 prend également les positions intermédiaires a21, b21, c21 et d21 avant la position finale e21. L'axe d'articulation 22 de la biellette de renvoi 23, à la deuxième extrémité de la bielle 21, passe de même par les positions intermédiaires a22, b22, c22, d22 pour atteindre la position e22. Le galet 26 solidaire du déflecteur 113 effectue la plus grande partie de sa course de déplacement à l'intérieur de la rainure 25 de la biellette de renvoi 23 entre la position à l'extrémité radialement externe de ladite rainure 25 représentée à la figure 3 correspondant à un encombrement radial minimal du déflecteur 113 dans la position fermée de l'inverseur et la première position intermédiaire a23 représentée à la figure 5 correspondant au déploiement de l'inverseur.

Deux positions intermédiaires b23 et c23 sont montrées avant que le galet atteigne en d23 sa position définitive à l'extrémité radialement interne de la rainure 22 qu'il conserve en e23 dans la position déployée pour laquelle le déflecteur 113 occupe la position qui assure les performances optimales de l'inversion.

On constate, notamment en regardant la figure 4, que compte tenu de la position du déflecteur 113 dans la configuration de flux inversé, il est possible de donner au panneau interne 111 de la porte 107 une position telle qu'elle corresponde, en position de jet direct, à la surface théorique 14 de la veine. Il est avantageux de compléter cette disposition par une plaque d'obturation 27, solidaire du vérin 7a et fermant, en position jet direct, le tunnel 7b. Ainsi, comme cela est parfaitement visible sur la figure 3, on dispose, en configuration de jet direct, d'une porte ne comportant plus aucune cavité 16, ce qui est précisément le but recherché.

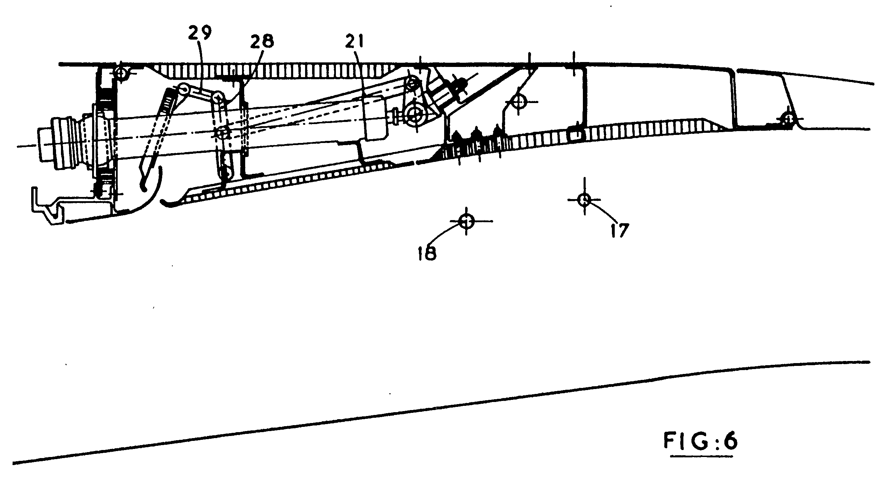

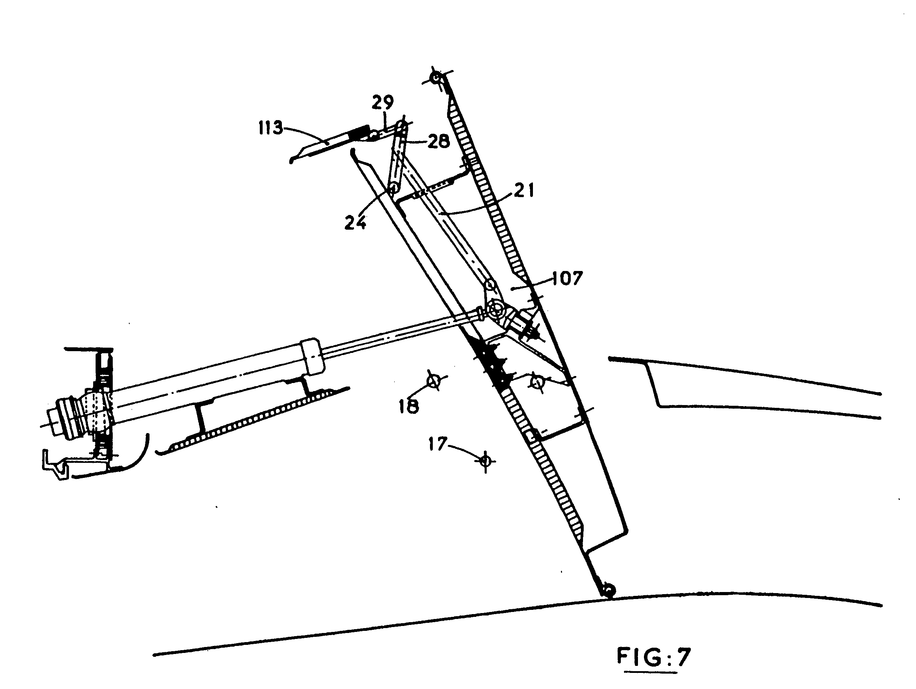

Les figures 6 et 7 représentent, respectivement en configuration jet direct et jet inversé, une très légère variante de la disposition précédente. La seule différence réside dans le remplacement de la biellette de renvoi 23 dont la rainure 25 coopère avec le galet 26 par un jeu de deux biellettes 28 et 29. Le fonctionnement de cette variante reste identique à celui qui a été décrit précédemment.

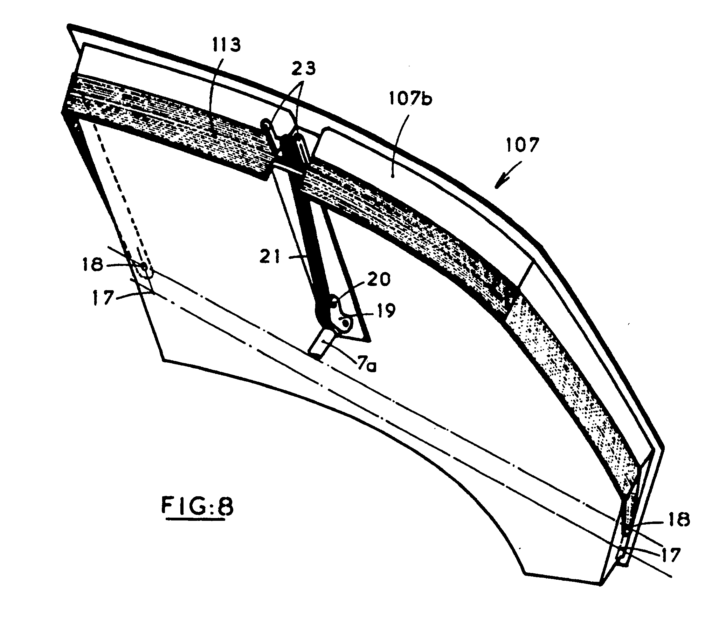

La vue en perspective de la figure 8 illustre une porte 107 telle qu'elle vient d'être décrite. Cette porte y est représentée en configuration de jet inversé avec le déflecteur 113 en position active. On imagine que lorsque ce déflecteur 113 est rétracté, le panneau interne 111 est tel qu'il ne comporte, en configuration jet direct, aucune cavité gênante.

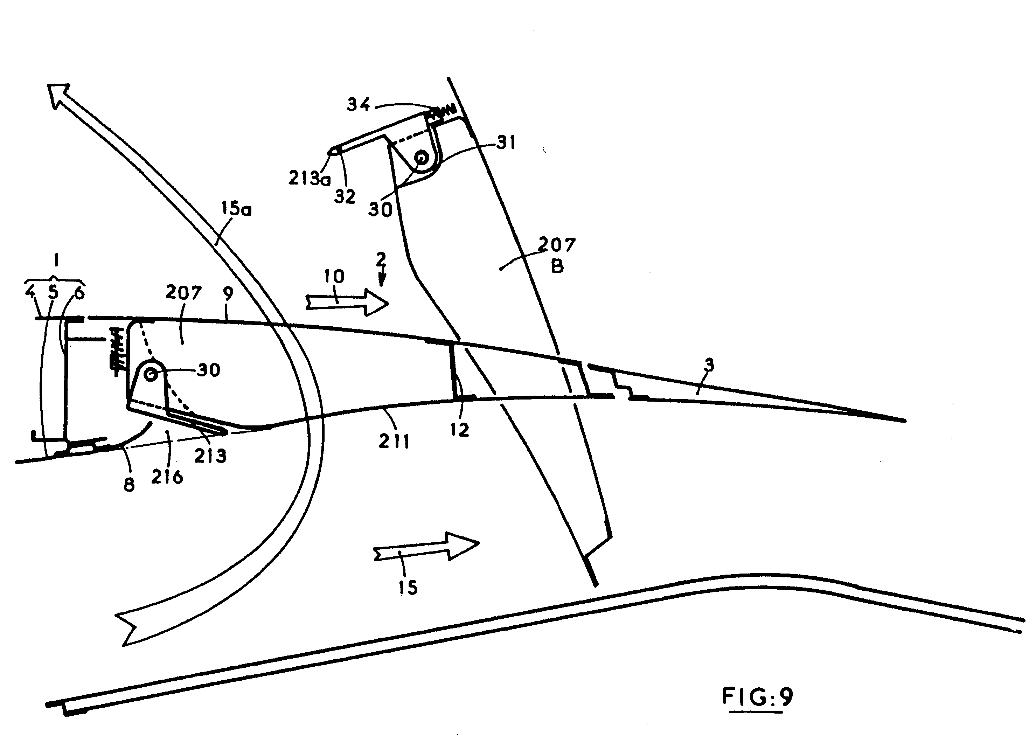

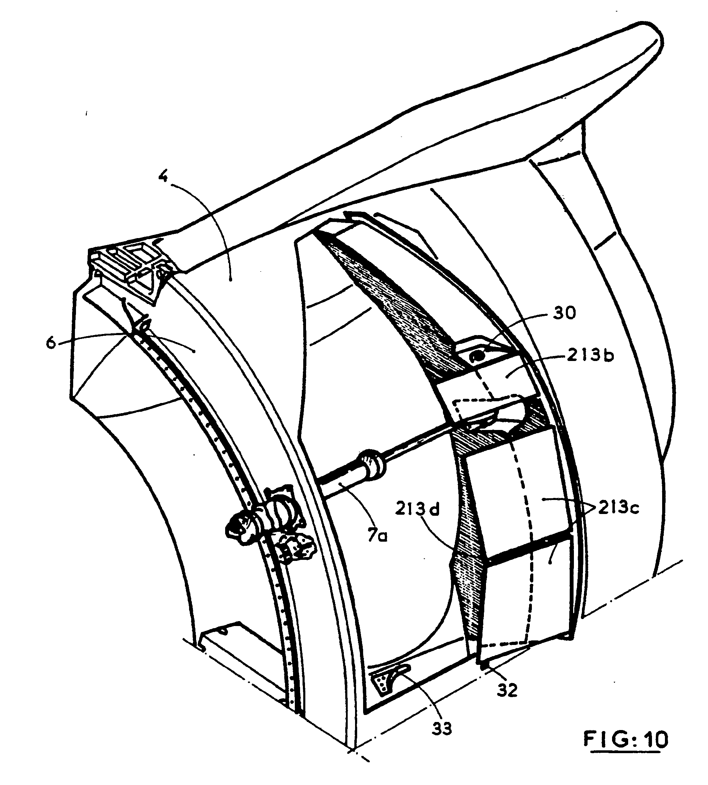

L'inverseur de poussée réalisé selon un second mode et représenté aux figures 9 et 10 comporte la partie fixe amont 1 composée du panneau externe 4 de nacelle, le panneau externe 5 de veine du flux secondaire représenté par la flèche 15, panneau dont l'extrémité aval est prolongée par le bord de déviation 8 et le cadre avant 6 formant le support du vérin 7a, puis la partie mobile 2 constituée de portes 207, chacune composée du panneau externe 9 constituant la paroi de délimitation aérodynamique du flux extérieur au moteur représenté par la flèche 10 lorsque la porte 7 est en position fermée, du panneau interne 211, de la structure intérieure 12 et de l'ensemble des déflecteurs et enfin la virole arrière fixe 3.

L'ensemble des déflecteurs de la porte 207 comporte notamment un déflecteur 213 remarquable selon l'invention. Au lieu d'être fixe comme le déflecteur 13 par rapport à la porte 7 de l'exemple connu de réalisation représenté aux figures 1 et 2, le déflecteur 213 est mobile et au lieu d'occuper l'espace ménagé entre le cadre avant 6 de la partie fixe amont 1 de l'inverseur, le bord de déviation 8 et l'avant de la porte 7, obligeant à donner à la face interne de la partie avant du panneau interne 11 de porte le profil représenté sur les figures 1 et 2, créant ainsi, dans l'exemple connu, la cavité 16 qui s'écarte de la surface théorique aérodynamique 14 causant les perturbations préjudiciables d'écoulement, au contraire, dans ce mode de réalisation de l'invention, lorsque l'inverseur est dans la position fermée représentée à la figure 3, le déflecteur 213 a une position rabattue sur la face interne du panneau intérieur 211 de la porte 207. On voit de cette manière que la cavité subsistante 216 est de dimension notablement réduite par rapport à la cavité 16 selon la technique antérieure. Par suite un écoulement nettement amélioré du flux secondaire en poussée directe est obtenu, en évitant l'apparition de tourbillons dans la cavité et en réduisant les pertes d'énergie correspondantes. Par contre, comme le montre la position B de la porte 207 représentée à la figure 9, lorsque l'inverseur prend sa position déployée correspondant à l'inversion du flux secondaire représenté par la flèche 15a, le déflecteur 213 prend une position déployée de manière à assurer les performances d'inversion par une orientation optimale du flux inversé. A cet effet le déflecteur 213 est muni d'un axe 30 dont les extrémités tourillonnent dans des cavités 31 ménagées sur la porte 207. L'axe 30 peut être subdivisé en deux portions de part et d'autre du déflecteur 213. Le bord latéral du déflecteur 213 est muni d'au moins un bossage de guidage 32 susceptible de coopérer avec une rampe 33 qui est solidaire de la partie fixe amont 1 de l'inverseur. L'extrémité libre du déflecteur 213 comporte un biseautage 213a de manière à favoriser, lors du passage en position d'inversion, l'appui des forces aérodynamiques créées par le flux inversé sur la face du déflecteur afin de compléter son ouverture, ouverture qui est elle-même provoquée par le coulissement du bossage 32 dans la rampe 33 lors du déplacement de la porte 207 obtenu par l'action du vérin 7a, de manière connue et tel que représenté à la figure 10. La porte 207 comporte en outre à l'avant, du côté radialement externe, une butée réglable 34 destinée à limiter l'amplitude du pivotement du déflecteur 213. La figure 10 montre en outre que le déflecteur 213 peut être scindé en deux parties de part et d'autre du vérin de commande 7a, ces deux parties 213b, 213c pouvant si nécessaire être subdivisées, par exemple selon la ligne double 213d affectant la partie 213c.

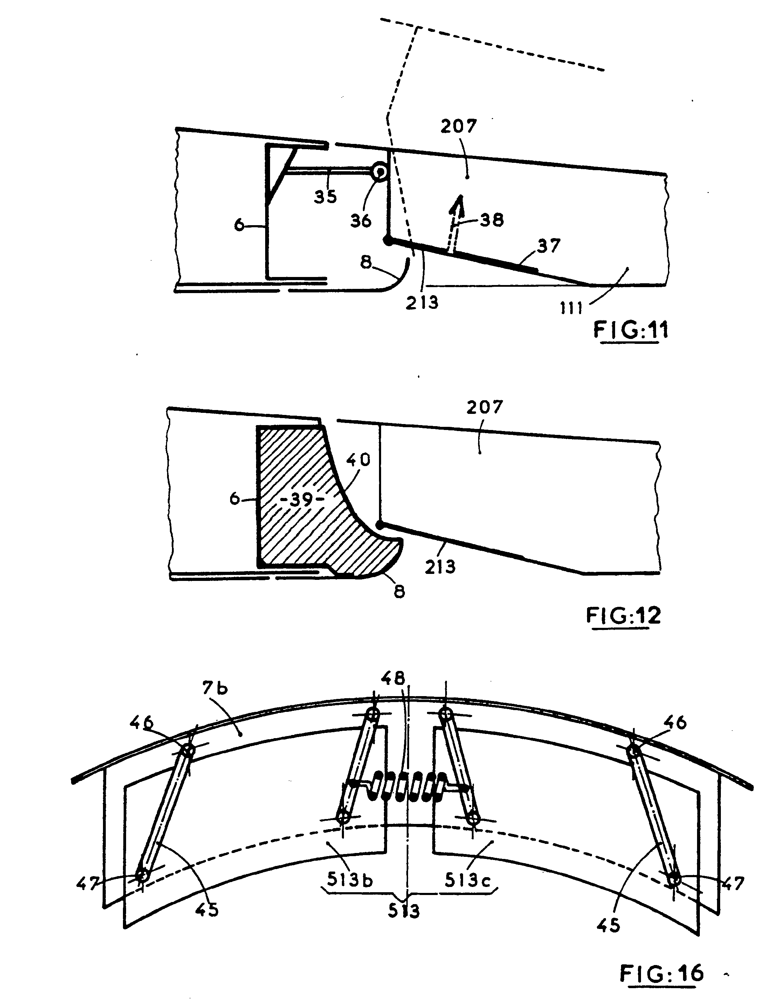

Dans ce mode de réalisation de l'inverseur de poussée conforme à l'invention décrit ci-dessus en référence aux figures 9 et 10, quelques dispositions complémentaires peuvent être adjointes. Notamment, comme représenté schématiquement à la figure 11, sur le cadre avant 6 de la partie fixe amont 1 de l'inverseur, est fixée, par tout moyen usuel connu, une tige-poussoir 35 munie à son extrémité d'un dispositif anti-friction, tel qu'une roulette 36 recouverte d'une couche d'un matériau anti-friction, PTFE par exemple, qui vient au contact du déflecteur 213, lors du retour de la porte 207 à sa position fermée, afin, d'amorcer le mouvement de repli du déflecteur 213 vers la face du panneau interne 211 de porte. La tige-poussoir 35 est dimensionnée pour éviter toute interférence géométrique entre l'extrémité 213a du déflecteur 213 et le bord de déviation 8. Dès que le mouvement d'escamotage est suffisamment amorcé pour assurer le dégagement de l'extrémité 213a, le simple appui du déflecteur 213 sur le bord de déviation 8 complète l'escamotage final du déflecteur 213 qui peut venir se placer dans un logement 37, ménagé sur la face de la partie avant du panneau interne 211 de la porte 207. Dans la position repliée du déflecteur 213, correspondant au fonctionnement en poussée directe, les efforts aérodynamiques plaquent le déflecteur 213 contre son logement 37 et un évent 38 de mise à l'air libre peut être adjoint afin de renforcer le verrou aérodynamique.

Comme schématisé sur la figure 12, la partie fixe amont 1 de l'inverseur de poussée peut comporter au moins une cloison 39 solidaire du cadre avant 6 qui découple en sous-cavités la cavité formée entre le cadre-avant 6, le bord de déviation 8 et la partie frontale avant de la porte 207. Cette cavité en effet en faisant communiquer entre elles des zones soumises à un gradient azimutal de pression peut augmenter la résonance aérodynamique de l'inverseur de poussée, risquant d'amplifier les phénomènes instationnaires et les régimes pulsants liés à la soufflante du turboréacteur. On obtient une résonance réduite dans les sous-cavités limitées par la cloison 39. On notera que ce type de cloison 39 décrit en liaison avec la présente variante de réalisation pourrait également être associé à tout autre type de bord de déviation. Dans la réalisation décrite, la face arrière 40 de ladite cloison 39 comporte, conformément à l'invention, un détourage de profil adapté, éventuellement renforcé par une bande anti-usure, sur lequel le déflecteur 213 vient en appui dans son mouvement d'escamotage décrit ci-dessus.

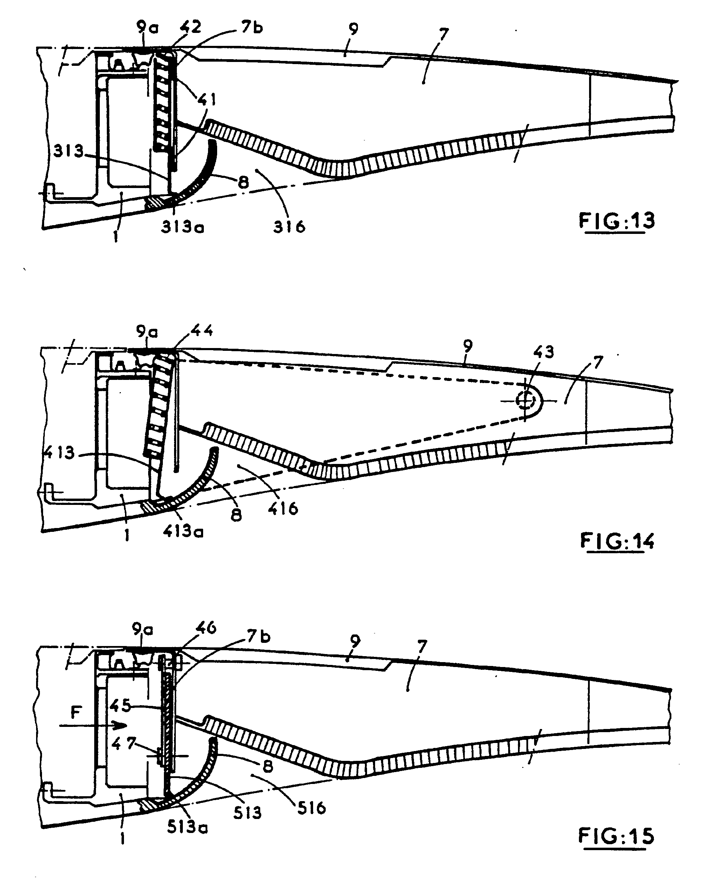

Selon le troisième mode de réalisation de l'invention représenté à la figure 13, un déflecteur mobile 313 est monté sur des glissières 41 solidaires de la paroi avant 7b de la porte 7. Ledit déflecteur 313 est solidaire de ressorts tels que 42 qui sont en appui sur le bord avant 9a du panneau externe 9 de la porte 7. En position déployée, le déflecteur 313 se déplace sur les glissières 41 sous l'effet des ressorts 42 de manière à assurer les performances d'inversion.

En position fermée, l'extrémité radialement interne 313a du déflecteur 313 prend appui sur la structure de la partie fixe amont 1 de l'inverseur, ou du bord de déviation 8, réduisant ainsi l'encombrement radial de la partie avant de la porte 7 de manière à réduire la profondeur de la cavité 316 par rapport à la cavité 16 pour une longueur active donnée du déflecteur 313 en position d'inversion.

Selon le quatrième mode de réalisation de l'invention représenté à la figure 14, un déflecteur mobile 413 relié à la porte 7 présente, en section selon le plan longitudinal de coupe de l'inverseur, une forme générale en U et comporte deux pivots tels que 43 qui sont montés sur les faces latérales de la porte 7. Un ressort 44 assure le pivotement du déflecteur 413 lors de l'ouverture de la porte 7 pour atteindre la position d'inversion de poussée. Lors du retour à la position fermée, l'extrémité 413a du déflecteur 413 prend appui sur la structure de la partie fixe amont 1 de l'inverseur, ou du bord de déviation 8, de sorte que le déflecteur 413 vient s'intégrer entre le bord de déviation 8 et le bord avant 9a du panneau externe 9 de la porte 7. Cette disposition, comme la précédente, permet une réduction notable de la cavité 416 par rapport à la cavité 16 de la figure 1.

Selon le cinquième mode de réalisation représenté sur les figures 15 et 16, un déflecteur mobile 513 est formé de deux parties 513b et 513c, chacune respectivement reliée à la paroi avant 7b de la porte 7 par deux biellettes 45 articulées à chaque extrémité respectivement par un axe 46 sur la face avant 7b de la porte 7 et par un axe 47 sur le déflecteur mobile 513.

Les deux biellettes 45 associées aux bords voisins des deux parties 513b et 513c du déflecteur sont reliées par un ressort 48. Lors de l'ouverture de la porte 7 pour atteindre la position d'inversion de poussée, sous l'action du ressort 48, les biellettes 45 associées à une partie différente, respectivement 513b et 513c, du déflecteur tendent à être ramenées à une position correspondant à des directions parallèles et il en résulte un déploiement du déflecteur 513 dans le flux, de manière à assurer les performances recherchées d'inversion. Lors du retour à la position fermée, l'extrémité 513a du déflecteur 513, comme précédemment décrit dans le quatrième mode de réalisation en référence à la figure 14 et dans le troisième mode en référence à la figure 13, prend appui sur la structure de la partie fixe amont 1 de l'inverseur, ou du bord de déviation 8, et après le déplacement en oblique des parties 513b et 513c, ainsi obtenu au moyen des biellettes 45, le déflecteur 513 vient ainsi s'intégrer entre le bord de déviation 8 et le bord avant 9a du panneau externe 9 de la porte 7. La cavité 516 obtenue est sensiblement équivalente de celle des modes de réalisation précédents.

## Revendications

1. Inverseur de poussée de turboréacteur à double flux comportant des portes basculantes susceptibles, en position fermée, de s'intégrer dans la paroi extérieure du canal annulaire du flux secondaire, et, en position déployée, de dévier ledit flux secondaire, chaque porte (7 ; 107 ; 207) étant constituée au moins d'un panneau externe (9), d'un panneau interne (11), d'une structure de liaison (12) entre lesdits panneaux (9, 11) et d'au moins un déflecteur (113 ; 213 ; 313 ; 413 ; 513) placé à son bord amont suivant une orientation générale perpendiculaire audit panneau externe (9) et étant associée à des moyens de commande des déplacements, tels qu'un vérin (7a) caractérisé en ce que ledit déflecteur (113 ; 213 ; 313 ; 413 ; 513) de porte est relié à la porte par des moyens de liaison (19-29 ; 30-34 ; 35-40 ; 41-42 ; 43-44 ; 45-48) qui constituent des moyens de déploiement dudit déflecteur par rapport à la porte lorsque la porte est ouverte, l'inverseur de poussée se trouvant en position d'inversion et des moyens d'escamotage dudit déflecteur par rapport à la porte lorsque la porte est fermée, l'inverseur de poussée se trouvant dans la position correspondant à la poussée directe, de manière à réduire le volume de la cavité (116-516) formée, dans ladite position de poussée directe, entre la face interne de la partie avant du panneau interne (11) de porte et la surface théorique (14) de délimitation aérodynamique du profil de veine de circulation du flux secondaire.

2. Inverseur de poussée selon la revendication 1 caractérisé en ce que le cadre avant (6) de la partie fixe amont (1) de l'inverseur supporte au moins une cloison (39) orientée dans une direction longitudinale.

3. Inverseur de poussée selon l'une des revendications 1 ou 2 caractérisé en ce que le déflecteur mobile (113) est relié à la porte (107) d'une part, par des pivots d'articulation (18) fixés sur chaque bord latéral de ladite porte (107) et, d'autre part, par au moins une biellette de renvoi (23, 28) articulée sur des pivots (24) solidaires de la paroi avant (107b) de la porte (107) et comportant un axe d'articulation (22) sur la deuxième extrémité d'une bielle (21) dont la première extrémité est articulée sur l'extrémité de la tige du vérin (7a) de commande des déplacements de la porte (107).

4. Inverseur de poussée selon la revendication 3 caractérisé en ce que chaque biellette de renvoi (23) comporte une rainure (25) dont les flancs guident un galet (26) solidaire du déflecteur (113).

5. Inverseur de poussée selon la revendication 3 caractérisé en ce que chaque biellette de renvoi (28) est articulée en son milieu à la bielle (21) de liaison au vérin (7a) tandis que l'extrémité opposée au pivot (24) est articulée à une biellette (29) de liaison au déflecteur (113).

6. Inverseur de poussée selon la revendication 1 caractérisé en ce que lesdits moyens de liaison entre le déflecteur mobile (213) et la porte (207) sont constitués par des moyens de pivotement consistant en un axe (30) dont les extrémités tourillonnent dans des cavités (31) ménagées sur la porte (207).

7. Inverseur de poussée selon la revendication 2 caractérisé en ce que lesdits moyens de liaison entre le déflecteur mobile (213) et la porte (207) sont constitués par des moyens de pivotement consistant en un axe (30) dont les extrémités tourillonnent dans des cavités (31) ménagées sur la porte (207).

8. Inverseur de poussée selon l'une des revendications 6 ou 7 caractérisé en ce que le déflecteur mobile (213) comporte au moins deux parties (213b, 213c) de part et d'autre du vérin de commande (7a).

9. Inverseur de poussée selon l'une quelconque des revendications 6 à 8 caractérisé en ce que le déflecteur (213) comporte sur au moins un de ses bords latéraux un bossage de guidage (32) susceptible de coopérer pendant la fermeture de la porte (207) avec une rampe (33) qui est solidaire de la partie fixe amont (1) de l'inverseur.

10. Inverseur de poussée selon l'une quelconque des revendications 6 à 9 caractérisé en ce qu'une butée réglable (34) solidaire de la face avant de la porte (207) limite l'amplitude du pivotement du déflecteur (213).

11. Inverseur de poussée selon l'une quelconque des revendications 6 à 10 caractérisé en ce que l'extrémité libre du déflecteur (213) comporte un biseautage (213a) de manière que les forces aérodynamiques du flux inversé participent au déplacement du déflecteur en position d'inversion lors de l'ouverture de la porte (207).

12. Inverseur de poussée selon l'une quelconque des revendications 6 à 11 caractérisé en ce qu'une tige-poussoir (35) solidaire du cadre avant (6) de la partie fixe amont (1) d'un inverseur coopère avec le déflecteur mobile (213) lors du retour de la porte (207) à sa position fermée.

13. Inverseur de poussée selon l'une quelconque des revendications 6 à 12 caractérisé en ce qu'un évent (38) de mise à l'air libre est ménagé à partir de la face interne de la partie avant du panneau interne (11) de la porte (207) sur laquelle s'applique le déflecteur (213), dans la position fermée.

14. Inverseur de poussée selon la revendication 7 caractérisé en ce que la face arrière (40) de la cloison (39) est profilée de manière à servir d'appui au déflecteur (213) lors de son mouvement de retour à la position fermée.

15. Inverseur de poussée selon l'une des revendications 1 ou 2 caractérisé en ce que lesdits moyens de liaison entre le déflecteur mobile (313) et la porte (7) sont constitués par des moyens de translation comportant des glissières (41) solidaires de la paroi avant (7b) de la porte (7) et des ressorts (42) qui sont en appui sur le bord avant (9a) du panneau externe (9) de la porte (7).

16. Inverseur de poussée selon l'une des revendications 1 ou 2 caractérisé en ce que le déflecteur mobile (413) est enveloppant et présente en section longitudinale une forme en U, les faces latérales étant montées au moyen de pivots (43) sur les faces latérales de la porte (7) et un mouvement de pivotement du déflecteur (413) pour passer à la position déployée d'inversion de poussée étant obtenu au moyen d'un ressort (44) qui est en appui sur le bord avant (9a) du panneau externe (9) de la porte (7).

17. Inverseur de poussée selon l'une des revendications 1 ou 2 caractérisé en ce que le déflecteur mobile (513) est composé d'au moins deux parties (513b, 513c), les moyens de liaison de chaque partie de déflecteur (513b, 513c) comportant au moins deux biellettes (45) articulées à une extrémité sur la paroi avant (7b) de la porte (7), les deux biellettes (31) associées aux bords voisins de deux parties (513b, 513c) de déflecteur étant reliées par un ressort (48).

**Patentansprüche**

1. Schubumkehrvorrichtung für ein Zweistrom-Strahltriebwerk mit verschwenkbaren Klappen, die sich in geschlossener Position in die Außenwand des ringförmigen Kanals des Sekundärstroms einfügen und in ausgefahrener Position den Sekundärstrom umleiten können, wobei jede Klappe (7 ; 107 ; 207 ; 307) aus wenigstens einer äußeren Platte (9), einer inneren Platte (11), einer zwischen den Platten (9, 11) angeordneten Verbindungskonstruktion (12) und wenigstens einem Deflektor (113 ; 213 ; 313 ; 413 ; 513) besteht, der an seinem stromaufwärtigen Rand in einer zu der äußeren Platte (9) im wesentlichen senkrechten Orientierung angeordnet ist, und wobei der Klappe Mittel, z.B. ein Arbeitszylinder (7a), für ihren Bewegungsantrieb zugeordnet sind, dadurch gekennzeichnet, daß der Deflektor (113 ; 213 ; 313 ; 413 ; 513) der Klappe mit dieser über Verbindungsmittel (19-29 ; 30-34 ; 35-40 ; 41-42 ; 43-44 ; 45-48) verbunden ist, die Mittel bilden zum Ausstellen des Deflektors relativ zu der Klappe, wenn die Klappe geöffnet ist und die Schubumkehrvorrichtung sich in Schubumkehrposition befindet, sowie Mittel zum Versenken des Deflektors relativ zu der Klappe, wenn diese geschlossen ist und die Schubumkehrvorrichtung sich in der dem Direktschub entsprechenden Position befindet, so daß das Volumen des Hohlraums (116, 516) verkleinert wird, der in der Direktschubposition zwischen der Innenseite des vorderen Teils der inneren Platte (11) der Klappe und der theoretischen aerodynamischen Grenzfläche (14) des Zirkulations-Strömungsprofils des Sekundärstroms gebildet ist.

2. Schubumkehrvorrichtung nach Anspruch 1, dadurch gekennzeichnet, daß der vordere Rahmen (6) des festen stromaufwärtigen Teils (1) der Schubumkehrvorrichtung wenigstens eine Trennwand (39) trägt, die in einer Längsrichtung orientiert ist.

3. Schubumkehrvorrichtung nach Anspruch 1 oder 2, dadurch gekennzeichnet, daß der bewegliche Deflektor (113) mit der Klappe (107) einerseits über an jedem Seitenrand der Klappe (107) befestigte Gelenkzapfen (18) und andererseits über wenigstens einen Umlenkschwingarm (23, 28) verbunden ist, der an mit der vorderen Wand (107b) der Klappe (107) fest verbundenen Zapfen (24) gelenkig gelagert ist und eine Gelenkachse (22) an dem zweiten Ende einer Pleuelstange (21) aufweist, deren erstes Ende mit dem Ende der Kolbenstange des Arbeitszylinders (7a) für den Bewegungsantrieb der Klappe (107) gelenkig verbunden ist.

4. Schubumkehrvorrichtung nach Anspruch 3, dadurch gekennzeichnet, daß jeder Umlenkschwingarm (23) eine Nut (25) aufweist, deren Flanken eine mit dem Deflektor (113) fest verbundene Rolle (26) führen.

5. Schubumkehrvorrichtung nach Anspruch 3, dadurch gekennzeichnet, daß jeder Umlenkschwingarm (28) in seiner Mitte an der mit dem Arbeitszylinder (7a) verbundenen Pleuelstange (21) angelenkt ist, während das dem Zapfen (24) entgegengesetzte Ende an einem mit dem Deflektor (113) verbundenen Schwingarm (29) angelenkt ist.

6. Schubumkehrvorrichtung nach Anspruch 1, dadurch gekennzeichnet, daß die zwischen dem beweglichen Deflektor (113) und der Klappe (207) vorgesehenen Verbindungsmittel von Schwenkmitteln gebildet werden, die aus einer Achse (30) bestehen, deren Enden sich in an der Klappe (207) angebrachten Ausnehmungen (31) drehen.

7. Schubumkehrvorrichtung nach Anspruch 2, dadurch gekennzeichnet, daß die zwischen dem beweglichen Deflektor (213) und der Klappe (207) vorgesehenen Verbindungsmittel von Schwenkmittel gebildet werden, die aus einer Achse (30) bestehen, deren Enden sich in an der Klappe (207) angebrachten Ausnehmungen (31) drehen.

8. Schubumkehrvorrichtung nach Anspruch 6 oder 7, dadurch gekennzeichnet, daß der bewegliche Deflektor (213) wenigstens zwei Teile (213b, 213c) aufweist, die zu beiden Seiten des Arbeitszylinders (7a) liegen.

9. Schubumkehrvorrichtung nach einem der Ansprüche 6 bis 8, dadurch gekennzeichnet, daß der Deflektor (213) an wenigstens einer seiner Seitenkanten einen Führungsansatz (32) aufweist, der während des Schließens der Klappe (207) mit einer Rampe (33) zusammenwirken kann, die mit dem festen stromaufwärtigen Teil (1) der Schubumkehrvorrichtung fest verbunden ist.

10. Schubumkehrvorrichtung nach einem der Ansprüche 6 bis 9, dadurch gekennzeichnet, daß ein mit der Vorderseite der Klappe (207) fest verbundener verstellbarer Anschlag (34) die Amplitude der Schwenkbewegung des Deflektors (213) begrenzt.

11. Schubumkehrvorrichtung nach einem der Ansprüche 6 bis 10, dadurch gekennzeichnet, daß der freie Endbereich des Deflektors (213) eine Abschrägung (213a) aufweist, so daß die aerodynamischen Kräfte der invertierten Strömung an der Bewegung des Deflektors in seine Umkehrposition bei dem Öffnen der Klappe (207) beteiligt sind.

12. Schubumkehrvorrichtung nach einem der Ansprüche 6 bis 11, dadurch gekennzeichnet, daß eine Stößelstange (35), die fest mit der vorderen Rahmen (6) des stromaufwärtigen festen Teils (1) einer Schubumkehrvorrichtung verbunden ist, bei der Rückführung der Klappe (207) in ihre geschlossene Position mit dem beweglichen Deflektor (213) zusammenwirkt.

13. Schubumkehrvorrichtung nach einem der Ansprüche 6 bis 12, dadurch gekennzeichnet, daß von der Innenseite des vorderen Teils der inneren Platte (11) der Klappe (207), an der der Deflektor (213) in geschlossener Position anliegt, eine Entlüftungsöffnung (38) ausgeht.

14. Schubumkehrvorrichtung nach Anspruch 7, dadurch gekennzeichnet, daß die Rückseite (40) der Trennwand (39) ein solches Profil hat, daß sie den Deflektor (213) bei seiner Rückkehr in die geschlossene Position als Abstützung dient.

15. Schubumkehrvorrichtung nach einem der Ansprüche 1 oder 2, dadurch gekennzeichnet, daß die zwischen dem beweglichen Deflektor (313) und der Klappe (7) vorgesehenen Verbindungsmittel aus Translationsmitteln bestehen, die an der Vorderwand (7b) der Klappe (7) fest angebrachte Gleitbahnen (41) sowie Federn (42) umfassen, die sich gegen die Vorderwand (7a) der äußeren Platte (9) der Klappe (7) abstützen.

16. Schubumkehrvorrichtung nach einem der Ansprüche 1 oder 2, dadurch gekennzeichnet, daß der bewegliche Deflektor (413) eine Umhüllende bildet und einen U-förmigen Längsquerschnitt hat, wobei die Seiten durch Zapfen (43) an den Seiten der Klappe (7) montiert sind und eine Schwenkbewegung des Deflektors (413) zum Übergang in die ausgestellte Umkehrposition durch eine Feder (44) bewirkt wird, die sich gegen die Vorderkante (9a) der äußeren Platte (9) der Klappe (7) abstützt.

17. Schubumkehrvorrichtung nach einem der Ansprüche 1 oder 2, dadurch gekennzeichnet, daß der bewegliche Deflektor (513) aus wenigstens zwei Teilen (513b, 513c) zusammengesetzt ist und daß die Verbindungsmittel jedes Teils (513b, 513c) des Deflektors wenigstens zwei Schwingarme (45) umfassen, die mit einem Ende an der vorderen Wand (7b) der Klappe (7) angelenkt sind, wobei die beiden Schwingarme (29), die den benachbarten Kanten der beiden Teile (513b, 513c) des Deflektors zugeordnet sind, durch eine Feder (48) miteinander verbunden sind.

## Claims

1. Thrust reverser for a bypass turbojet engine comprising tilting doors capable, in the closed position, of integrating themselves in the outer wall of the annular channel of the secondary airflow and, in the deployed position, of diverting the said secondary airflow, each door (7 ; 107 ; 207) being made up of at least one outer panel (9), an inner panel (11), a connecting structure (12) between the said panels (9, 11) and at least one deflector (113 ; 213 ; 313 ; 413 ; 513) placed at its upstream edge in an orientation generally perpendicular to the said outer panel (9) and being associated with a means of control of its movements, such as a ram (7a) characterised in that the said door deflector (113 ; 213 ; 313 ; 413 ; 513) is connected to the door by a means of linkage (19-29 ; 30-34 ; 35-40 ; 41-42 ; 45-48) which constitutes the means of deploying the said deflector in relation to the door when the door is open, the thrust reverser being in the position of reversal of thrust and a means of retracting the said deflector in relation to the door when the door is closed, the thrust reverser being in the position corresponding to direct thrust, so as to reduce the volume of the cavity (116-516) formed, when in the direct thrust position, between the front part of the inner panel (11) of the door and the theoretical surface (14) of aerodynamic delimitation of the profile of the secondary airflow circulation.

2. Thrust reverser in accordance with Claim 1, characterised in that the front framework (6) of the fixed upstream part (1) of the thrust reverser carries at least one partition (39) orientated in a longitudinal direction.

3. Thrust reverser in accordance with either of Claims 1 or 2, characterised in that the movable deflector (113) is connected to the door (107) on the one hand, by the pivot pins (18) fixed to each lateral edge of the said door (107) and, on the other part, by at least one return connecting rod (23, 28) articulated on pivots (24) fixed to the front wall (107b) of the door (107) and comprising a pivot pin (22) on the second end of a connecting rod (21) whose first end is articulated on the end of the piston rod of the ram (7a) controlling the movement of the door (107).

4. Thrust reverser in accordance with Claim 3, characterised in that each return connecting rod (23) comprises a slot (25) of which the sides guide an idler pulley (26) fixed to the deflector (113).

5. Thrust reverser in accordance with Claim 3, characterised in that each return connecting rod (28) is articulated at its centre to a connecting rod (21) linking it to the ram (7a) whilst the opposite end to the pivot (24) is articulated to a connecting rod (29) linking it to the deflector (113).

6. Thrust reverser in accordance with Claim 1, characterised in that the said means of linkage between the movable deflector (213) and the door (107) are constituted by a means of articulation consisting of a pin (30) whose ends rotate in cavities (31) formed in the door (207).

7. Thrust reverser in accordance with Claim 2, characterised in that the said means of linkage between the movable deflector (213) and the door (207) are constituted by a means of articulation consisting of a pin (30) whose ends rotate in cavities (31) formed in the door (207).

8. Thrust reverser in accordance with either of Claims, 6 or 7, characterised in that the movable deflector (213) comprises at least two parts (213b, 213c) on either side of the control ram (7a).

9. Thrust reverser in accordance with any of Claims 6 to 8, characterised in that the deflector (213) comprises on at least one of its lateral edges a guide lug (32) capable of working in conjunction with a ramp (33) during the closure of the door (207), the ramp being fixed to the fixed upstream part (1) of the thrust reverser.

10. Thrust reverser in accordance with any of Claims 6 to 9, characterised in that an adjustable stop (34) fixed to the front face of the door (207) limits the amplitude of the articulation of the deflector (213).

11. Thrust reverser in accordance with any of Claims 6 to 10, characterised in that the free end of the deflector (213) comprises a bevel (213a) in such a way that the aerodynamic forces of the reversed airflow participate in moving the deflector into the reverse thrust position when the door (207) is opened.

12. Thrust reverser in accordance with any of Claims 6 to 11, characterised in that a push rod (35) fixed to the front framework (6) of the fixed upstream part (1) of a thrust reverser operates in conjunction with the movable deflector (213) during the return of the door (207) to its closed position.

13. Thrust reverser in accordance with any of Claims 6 to 12, characterised in that a bleed vent (38) to outside air is formed from the inner face of the inner panel (11) of the door (207) against which the deflector (213) presses when in the closed position.

14. Thrust reverser in accordance with Claim 7, characterised in that the rear face (40) of the partition (39) is profiled in such a way as to serve as a bearing surface for the deflector (213) during its return movement to the closed position.

15. Thrust reverser in accordance with either of Claims 1 or 2, characterised in that the said means of linkage between the movable deflector (313) and the door (7) are constituted by a means of translation comprising slides (41) fixed to the front face (7b) of the door (7) and springs (42) which press against the front edge (9a) of the outer panel (9) of the door (7).

16. Thrust reverser in accordance with either of Claims 1 or 2, characterised in that the movable deflector (413) is enveloping and presents a longitudinal section in the form of a U, the lateral faces being fitted by means of pivots (43) on the lateral faces of the door (7) and a pivotting movement of the deflector (413) when taking up the deployed position of thrust reversal being obtained by means of a spring (44) pressing against the front face (9a) of the outer panel (9) of the door (7).

17. Thrust reverser in accordance with either of Claims 1 or 2, characterised in that the movable deflector (513) is composed of at least two parts (513b, 513c,) the means of linking each part of of the deflector (513b, 513c) comprising at least two connecting rods (45) articulated at one end on the front wall (7b) of the door (7), two connecting rods (31) associated with the adjoining edges of the two parts (513b, 513c) of the deflector being connected by a spring (48).

FIG : 1

FIG : 3

EP 0 301 939 B1

FIG: 2

FIG:4

EP 0 301 939 B1

FIG:5

FIG:6

EP 0 301 939 B1

FIG:7

FIG:8

FIG:9

FIG:10

FIG:11

FIG:12

FIG:16

FIG:13

FIG:14

FIG:15